(19) Europäisches Patentamt
European Patent Office
Office européen des brevets

(11) **EP 1 847 319 A1**

(12) **EUROPEAN PATENT APPLICATION**
published in accordance with Art. 158(3) EPC

(43) Date of publication:
**24.10.2007 Bulletin 2007/43**

(51) Int Cl.:
*B01J 27/224* (2006.01)  *B01D 39/20* (2006.01)
*B01D 46/00* (2006.01)  *B01D 53/86* (2006.01)
*B01D 53/94* (2006.01)  *B01J 32/00* (2006.01)
*B01J 35/04* (2006.01)  *F01N 3/02* (2006.01)
*F01N 3/28* (2006.01)

(21) Application number: **06781815.3**

(22) Date of filing: **27.07.2006**

(86) International application number:
**PCT/JP2006/314904**

(87) International publication number:
**WO 2007/039979 (12.04.2007 Gazette 2007/15)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.10.2005 JP 2005291268**

(71) Applicant: **IBIDEN CO., LTD.**
**Ogaki-shi**
**Gifu 503-8604 (JP)**

(72) Inventor: **OHNO, Kazushige**
**Ibigawa-cho, Ibi-gun, Gifu 5010695 (JP)**

(74) Representative: **Grünecker, Kinkeldey,**
**Stockmair & Schwanhäusser**
**Anwaltssozietät**
**Maximilianstrasse 58**
**80538 München (DE)**

(54) **POROUS HONEYCOMB STRUCTURE AND EXHAUST GAS PURIFICATION APPARATUS MAKING USE OF THE SAME**

(57) In a catalyst carrier 30, NOx is temporarily stored in a NOx storage catalyst while HC and CO contained in a diesel engine 10 are oxidized by an oxidation catalyst. Since a porous honeycomb structure 32 mainly composed of silicon carbide is employed herein, the regeneration rate of a DPF 40 disposed at the downstream is increased as compared with the case of employing a honeycomb structure mainly composed of cordierite or the like.

Fig.1

EP 1 847 319 A1

**Description**

Field of the Invention

The present invention relates to a porous honeycomb structure used for converting exhaust gas and an exhaust gas cleanup device using the same.

Background Art

There has been conventionally known an exhaust gas cleanup device provided with a diesel particulate filter (DPF) for removing particulates contained in exhaust gas in a casing provided in an exhaust gas passage of an internal-combustion engine. As the exhaust gas cleanup device of this kind, for example, as shown in Patent Reference 1, there has been also known an exhaust gas cleanup device accommodating a catalyst carrier of a separate unit from the DPF in a casing and in which the catalyst carrier carries at least any one of oxides of Ce, Fe and Cu as a catalyst. This catalyst carrier is produced by using a porous honeycomb structure comprising of a silicon carbide sintered body.
[Patent Reference 1]
JP-A 2001-98925

Disclosure of the Invention

However, although the porous honeycomb structure comprising of the silicon carbide sintered body has been used as the catalyst carrier in the Patent Reference 1 described above, exhaust gas after passing through the exhaust gas cleanup device has been sometimes purified insufficiently, and the regeneration efficiency when efficiently burning the particulates trapped by the DPF to regenerate the DPF has sometimes risen insufficiently.

The present invention has been made to solve the aforementioned problems. It is one object of the present invention to provide a porous honeycomb structure having a high exhaust gas conversion efficiency and capable of easily regenerating the DPF when used being disposed at the upstream of the DPF with the catalyst carried. It is another object of the present invention to provide an exhaust gas cleanup device having a high exhaust gas conversion efficiency and capable of easily regenerating the DPF.

The present invention employs the following means so as to attain the above objects.

That is, according to a first of the present invention, there is provided a porous honeycomb structure for carrying a catalyst, wherein the porous honeycomb structure is mainly composed of silicon carbide, and has a wall thickness of 0.1 mm to 0.25 mm and an apparent density of 0.4g/cm$^3$ to 0.7 g/cm$^3$.

This porous honeycomb structure on which the catalyst is carried has a high exhaust gas conversion efficiency, and an effect of easily regenerating the DPF is obtained by the porous honeycomb structure when the porous honeycomb structure is used being disposed at the upstream of the DPF. Herein, the wall thickness of being less than 0.1 mm, may not provide sufficient strength. The wall thickness of being more than 0.25 mm, reduces the exhaust gas conversion efficiency when the porous honeycomb structure on which the catalyst is carried is used being disposed at the upstream of the DPF, and it becomes difficult to regenerate the DPF efficiently. Thereby, the wall thickness is preferably in a range of 0.1 mm to 0.25 mm. The apparent density of being less than 0.4 g/cm$^3$, may not provide sufficient strength. The apparent density of being more than 0.7 g/cm$^3$, reduces the exhaust gas conversion efficiency or the regeneration rate of the DPF when the porous honeycomb structure on which the catalyst is carried is used being disposed at the upstream of the DPF. Thereby, the apparent density is preferably in a range of 0.4 g/cm$^3$ to 0.7 g/cm$^3$. It is preferable that the porous honeycomb structure has a porosity of 40% to 50%, thereby obtaining a more remarkable effect of the present invention.

A second of the present invention is a porous honeycomb structure for carrying a catalyst that is mainly composed of silicon carbide and has an apparent density of 0.4g/cm$^3$ to 0.7 g/cm$^3$ and a porosity of 40% to 50%.

This porous honeycomb structure on which the catalyst is carried has a high exhaust gas conversion efficiency, and an effect of easily regenerating the DPF is obtained by the porous honeycomb structure when the porous honeycomb structure is used being disposed at the upstream of the DPF. Herein, the apparent density of being less than 0.4 g/cm$^3$, may not provide sufficient strength. The apparent density of being more than 0.7 g/cm$^3$, reduces the exhaust gas conversion efficiency or the regeneration rate of the DPF when the porous honeycomb structure on which the catalyst is carried is used being disposed at the upstream of the DPF. Thereby, the apparent density is preferably in a range of 0.4 g/cm$^3$ to 0.7 g/cm$^3$. The porosity of being less than 40%, or more than 50%, reduces the exhaust gas conversion efficiency or the regeneration rate of the DPF when the porous honeycomb structure on which the catalyst is carried is used being disposed at the upstream of the DPF. Thereby, the porosity is preferably in a range of 40 % to 50 %.

The first or second porous honeycomb structure of the present invention may be mainly composed of silicon carbide, and a porous honeycomb structure using only silicon carbide as a ceramic material and a porous honeycomb structure obtained by adding other components to the silicon carbide may be used. The former examples include a porous honeycomb structure obtained by firing a mixture containing silicon carbide coarse powder and silicon carbide fine powder and mainly composed of the silicon carbide coarse powder. The latter examples include a porous honeycomb structure obtained by firing a mixture containing silicon carbide and silicon and mainly composed of the silicon carbide. Since the silicon carbide has excellent thermal conductivity, the silicon carbide acts advantageously when using heat generated on the catalyst-carrying carrier for the regeneration of the DPF. Thereby, it is preferable that other components contained in the silicon carbide as a main component do not impair the thermal conductivity of the silicon carbide greatly.

It is preferable that one of or both an oxidation catalyst and NOx storage catalyst is carried as a catalyst on the first or second porous honeycomb structure of the present invention. Although the oxidation catalyst is not particularly limited as long as it can oxidize HC and CO, examples thereof include platinum, palladium and rhodium. Particularly preferable is platinum. Although the NOx storage catalyst is not particularly limited as long as it can store NOx, examples thereof include an alkali metal salt and alkali earth metal salt capable of storing NOx. Specific examples of the alkali metal salts include a potassium salt and a sodium salt. Particularly preferable is the potassium salt. Examples of the alkali earth metals salt include a barium salt, a calcium salt and a magnesium salt. Particularly preferable is the barium salt.

A third of the present invention is an exhaust gas cleanup device comprising, a casing allowing exhaust gas of a diesel engine to pass therethrough, a catalyst carrier stored in the casing, and a particulate filter stored at the downstream of the catalyst carrier in the casing, wherein the catalyst carrier is a porous honeycomb structure mainly composed of silicon carbide and having a wall thickness of 0.1 mm to 0.25 mm and an apparent density of $0.4 g/cm^3$ to $0.7 g/cm^3$ and a catalyst carried by the porous honeycomb structure, and the particulate filter is a porous honeycomb structure mainly composed of silicon carbide.

This exhaust gas cleanup device has a high exhaust gas conversion efficiency, and an effect of easily regenerating ratio the DPF is obtained. Herein, the wall thickness of being less than 0.1mm of the porous honeycomb structure constituting the catalyst carrier may not provide sufficient strength. The wall thickness of being more than 0.25 mm reduces the exhaust gas conversion efficiency or the regeneration rate of the DPF. Thereby, the wall thickness is preferably in a range of 0.1 mm to 0.25 mm. The apparent density of being less than $0.4 g/cm^3$ may not provide sufficient strength. The apparent density of being more than $0.7 g/cm^3$, reduces the exhaust gas conversion efficiency or the regeneration rate of the DPF. Thereby, the apparent density is preferably in a range of $0.4 g/cm^3$ to $0.7 g/cm^3$. It is preferable that the porous honeycomb structure constituting the catalyst carrier has a porosity of 40% to 50%, thereby obtaining a more remarkable effect of the present invention.

According to a fourth of the present invention, there is provided an exhaust gas cleanup device comprising, a casing allowing exhaust gas of a diesel engine to pass therethrough; a catalyst carrier stored in the casing, and a particulate filter stored at the downstream of the catalyst carrier in the casing, wherein the catalyst carrier includes a porous honeycomb structure mainly composed of silicon carbide and having an apparent density of $0.4 g/cm^3$ to $0.7 g/cm^3$ and a porosity of 40% to 50% and a catalyst carried by the porous honeycomb structure, and the particulate filter is a porous honeycomb structure mainly composed of silicon carbide.

This exhaust gas cleanup device has a high exhaust gas conversion efficiency, and an effect of easily regenerating the DPF is obtained. Herein, the apparent density of being less than $0.4 g/cm^3$ of the porous honeycomb structure constituting the catalyst carrier may not provide sufficient strength. The apparent density of being more than $0.7 g/cm^3$ reduces the exhaust gas conversion efficiency or the regeneration rate of the DPF when the porous honeycomb structure on which the catalyst is carried is used being disposed at the upstream of the DPF. Thereby, the apparent density is preferably in a range of $0.4 g/cm^3$ to $0.7 g/cm^3$. The he porosity of being less than 40%, or more than 50%, reduces the exhaust gas conversion efficiency or the regeneration rate of the DPF when the porous honeycomb structure on which the catalyst is carried is used being disposed at the upstream of the DPF. Thereby, the porosity is preferably in a range of 40 % to 50 %. It is preferable that the porous honeycomb structure constituting the catalyst carrier has a wall thickness of 0.1 mm to 0.25 mm, thereby obtaining a more remarkable effect of the present invention.

In an exhaust gas cleanup device according to the third or fourth of the present invention, it is preferable that a porous honeycomb structure constitutes a catalyst carrier carrying one of or both an oxidation catalyst and Nox storage catalyst. Although the oxidation catalyst is not particularly limited as long as it can oxidize HC and CO, examples thereof include platinum, palladium and rhodium. Particularly preferable is platinum. Although the NOx storage catalyst is not particularly limited as long as it can store NOx, examples thereof include an alkali metal salt and alkali earth metal salt capable of storing NOx. Specific examples of the alkali metal salts include a potassium salt and a sodium salt. Particularly preferable is the potassium salt. Examples of the alkali earth metals salt include a barium salt, a calcium salt and a magnesium salt. Particularly preferable is the barium salt.

Although various methods have been known as a regeneration method of the DPF, examples thereof include a so-called post injection method, a method for burning PM by using NOx which can no longer be stored as an oxidizer, and a method for burning by an external heating means such as a heater.

Brief Description of the Drawings

FIG. 1 shows the schematic constitution of an exhaust gas cleanup device 20 of the embodiment.
FIG. 2 is a perspective view of a catalyst carrier 30.
FIG. 3 is a perspective view of a basic honeycomb unit 50.
FIG. 4 is a perspective view of a unit assembly 58.
FIG. 5 is a perspective view of a DPF 40.
FIG. 6 is an illustration of an exhaust gas purification and conversion measurement apparatus 60.

Best Mode of Carrying Out the Invention

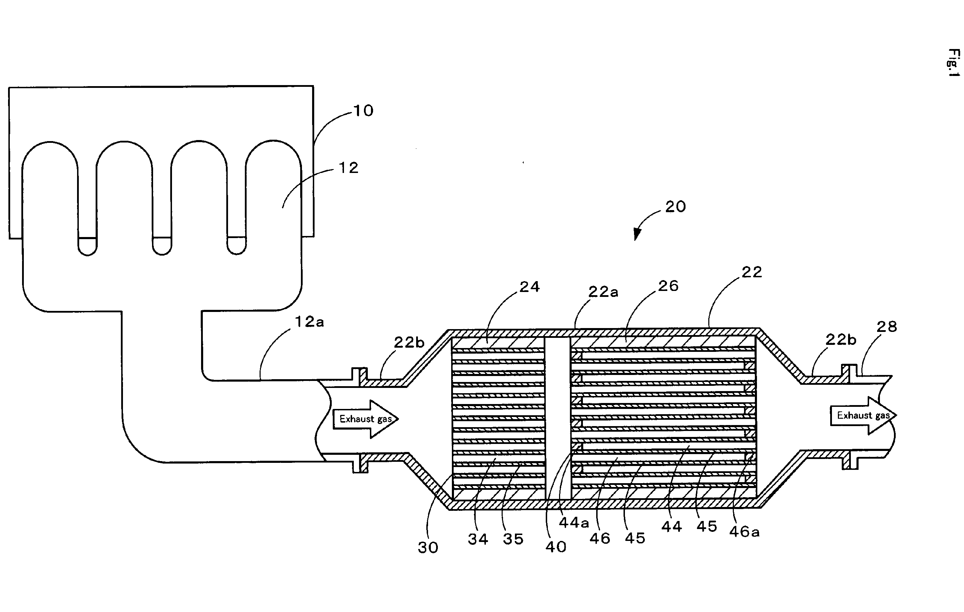

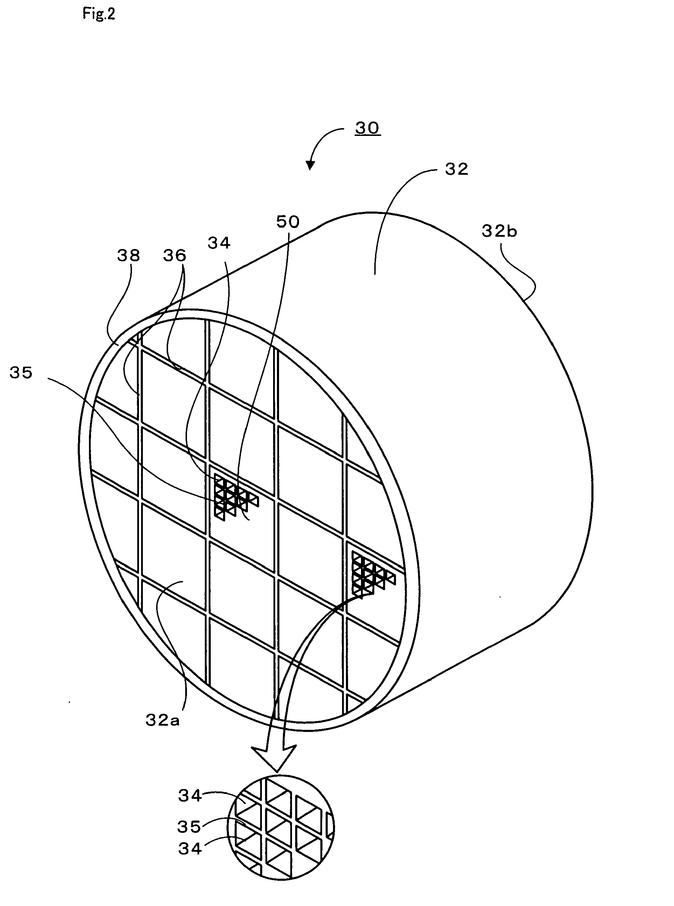

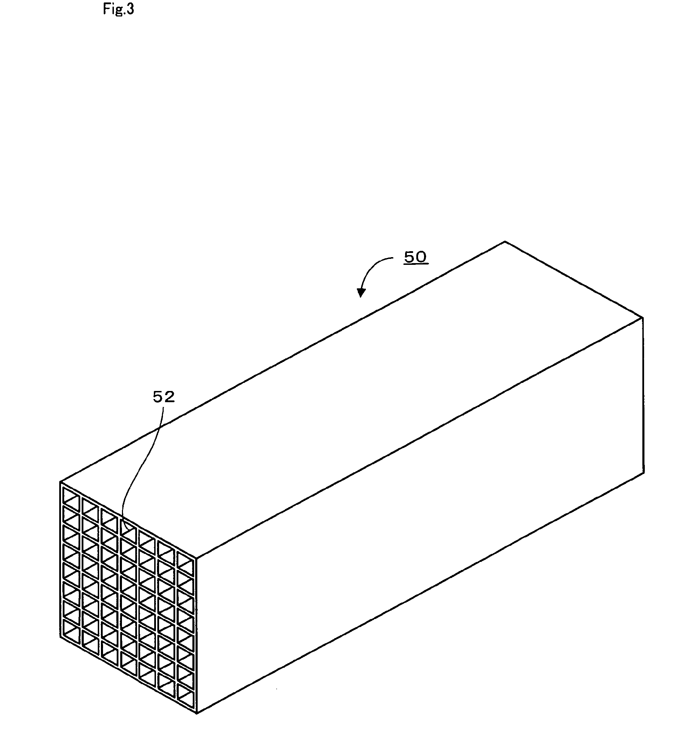

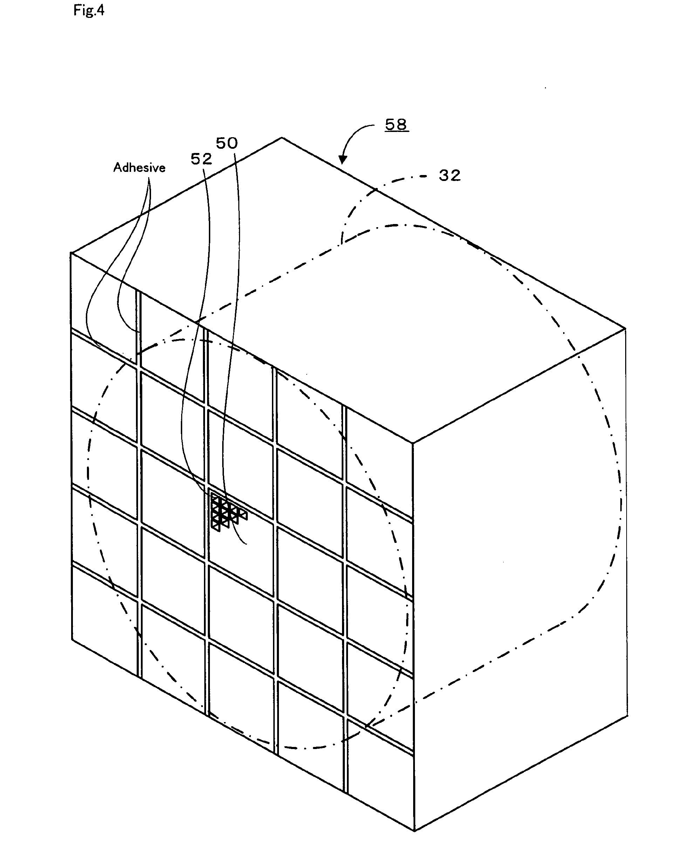

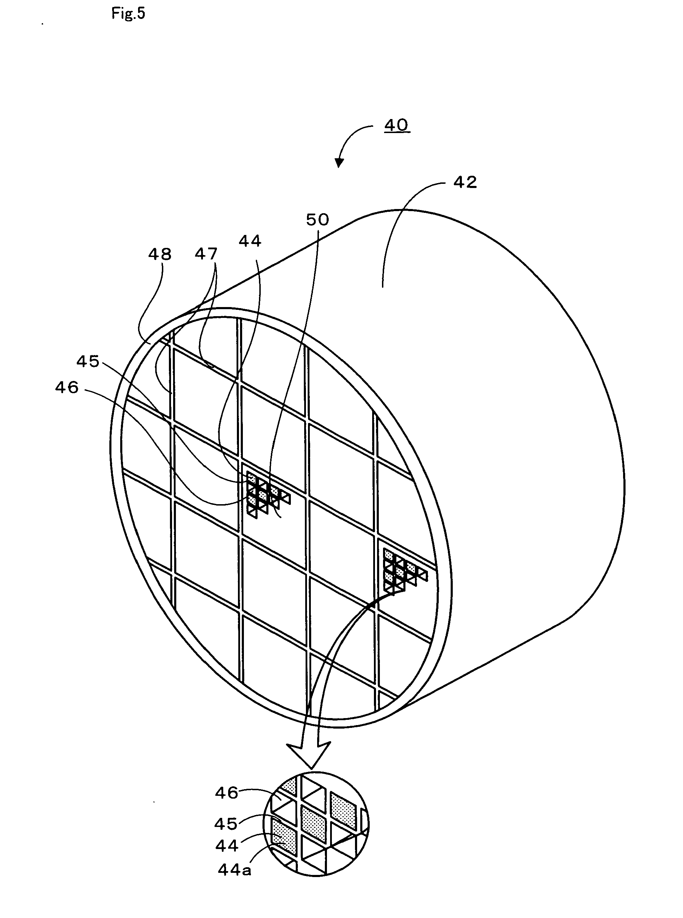

Next, some modes of carrying out the invention will be described below with reference to the drawings. FIG. 1 is an explanatory drawing showing a schematic constitution of an exhaust gas cleanup device 20 of the embodiment. FIG. 2 is a perspective view of a catalyst carrier 30. FIG. 3 is a perspective view of a basic honeycomb unit 50. FIG. 4 is a perspective view of a unit assembly 58. FIG. 5 is a perspective view of a DPF 40.

An exhaust gas cleanup device 20 of the embodiment is a device to be mounted on a diesel vehicle, including a casing 22 connected to a collecting pipe 12a of an exhaust manifold 12 for collecting exhaust gas discharged from each cylinder of a diesel engine 10 at an opening part of the upstream side, a catalyst carrier 30 fixed via an alumina mat 24 in the casing 22, and a DPF 40 disposed at the downstream of the catalyst carrier 30 in the casing 22 and fixedly held via an alumina mat 26.

The diesel engine 10 is constituted as an internal-combustion engine in which hydrocarbon system fuel such as light diesel oil is burned by injecting the hydrocarbon system fuel to air compressed by a piston to produce a driving force. Exhaust gas from this diesel engine 10 contains nitrogen oxide (NOx), hydrocarbon (HC), carbon monoxide (CO), and PM generated from carbon or the like contained in fuel. Herein, the term "PM" is a general term for a particulate matter discharged from the diesel engine. It is generally considered that a component (SOF) of fuel or lubricating oil left unburnt, and a sulfur compound (sulfate) or the like generated from a sulfur content in light diesel fuel are adsorbed on the circumference of black smoke (soot) comprising of carbon. The air/fuel ratio of the diesel engine 10 is controlled by an electronic control unit which is not shown. Specifically, the electronic control unit adjusts the amount of fuel consumption to each cylinder of the diesel engine 10 so that the ratio of fuel and air is set to a desired ratio.

The casing 22 is made of metal, and is formed in a shape where a small-diameter cylinder 22b is connected to the both ends of a large-diameter cylinder 22a via a taper. An exhaust manifold 12 is connected to an opening part of the upstream side via a flange, and an exhaust gas pipe 28 connected to a muffler which is not shown is connected to an opening part of the downstream side via a flange. The catalyst carrier 30 and the DPF 40 are stored in a cylinder 22a having a larger passing area than that of the collecting pipe 12a of the exhaust manifold 12.

The catalyst carrier 30 is disposed at the upstream of the DPF 40, and is obtained by carrying an oxidation catalyst and/or a NOx storage catalyst on a cylindrical honeycomb structure 32 comprising of a porous sintered body mainly composed of silicon carbide. As shown in FIG. 2, the honeycomb structure 32 has a plurality of passages 34 which penetrate an upper surface 32a and bottom face 32b of the cylindrical shape, and a partition wall 35 exists between the adjacent passages 34. The honeycomb structure 32 can be obtained by the following steps. A unit assembly 58 (see FIG. 4) having an adequate size to include a cylindrical shape which is the final shape is constituted by accumulating a plurality of basic honeycomb units 50 (see FIG. 3) having a rectangular parallelepiped shape and a plurality of through holes 52 by interposing an adhesive. This unit assembly 58 is then cut by a diamond cutter or the like so that it has the cylindrical shape which is the final shape. Thereby, the outer circumferential face is finished into a smooth cylindrical surface while a portion where a partition wall of the outer circumferential face partitioning the through holes 52 with each other is destroyed is filled with a coating agent. Therefore, as shown in FIG. 2, the honeycomb structure 32 has basic honeycomb units 50, an adhesive layer 36 adhering the basic honeycomb units 50 with each other and a coating layer 38 cylindrically covering the outer circumferential face. The basic honeycomb unit 50 constituting the honeycomb structure 32 is disposed near the center maintains a rectangular parallelepiped shape. However, the basic honeycomb unit 50 disposed along the outer circumferential face has a shape where a part of the rectangular parallelepiped shape is lacking. Although the oxidation catalyst carried by the honeycomb structure 32 is not particularly limited as long as it can accelerate the oxidization of HC or CO, for example, noble metal catalysts such as platinum, palladium and rhodium are preferable. More preferable is platinum. The carrying amount of the oxidation catalyst is preferably 1 to 10 g/L, and more preferably 1 to 5 g/L. On the other hand, the NOx storage catalyst carried by the honeycomb structure 32 is not particularly limited as long as it can store NOx under an oxidization atmosphere, and reduces and releases NOx under a reduction atmosphere. However, for example, an alkali metal salt and an alkali earth metal salt are preferable, and potassium carbonate and barium carbonate are more preferable. The carrying amount of the NOx storage catalyst is preferably 0.1 to 1 mol/L in terms of metal, and more preferably 0.1 to 0.5 mol/L. A nitrate may be used instead of a carbonate, and in this case, the NOx can be stored by initially controlling the exhaust gas so that fuel becomes rich to change the nitrate to carbonate.

(1) The honeycomb structure 32 is designed so that the wall thickness is set to 0.1 mm to 0.25 mm and the apparent density is set to 0.4 g/cm$^3$ to 0.7 g/cm$^3$. Or (2) the honeycomb structure 32 is designed so that the apparent density is 0.4 g/cm$^3$ to 0.7 g/cm$^3$ and the porosity (based on a mercury porosimetry) is set to 40% to 50%. Even when any of the above items (1) or (2) is employed, sufficient strength is obtained and the temperature of the honeycomb structure 32 is easily raised according to exhaust gas temperature, thereby easily exhibiting a conversion operation at an early stage. Herein, the apparent density of the honeycomb structure 32 can be calculated as the sum of a value obtained by multiplying the apparent density of the basic honeycomb unit 50 (substrate) by the weight percentage of the substrate to the whole, and another value obtained by multiplying the apparent density of the adhesive by the weight percentage of the adhesive to the whole. The number of the passages 34 per unit cross-section area is preferably 15.5 to 186/cm$^2$ (100 to 1200 cpsi). When it is in this range, the total area of the partition walls 35 that comes into contact with the exhaust gas is not excessively reduced and it does not become difficult to produce the honeycomb structure. The number of the passages 34 per unit cross - section area is preferably 46.5 to 170.5/cm$^2$ (300 to 1100 cpsi).

The DPF 40 is obtained by carrying an oxidation catalyst on a cylindrical honeycomb structure 42 comprising of a porous sintered body mainly composed of silicon carbide. The honeycomb structure 42 has a plurality of passages 44 and 46 extending along the axis line of the cylindrical shape. Although this honeycomb structure 42 is produced using the basic honeycomb unit 50 in almost the same manner as the honeycomb structure 32, as shown in FIG. 1, the honeycomb structure 42 is different from the honeycomb structure 32 in that an opening of the upstream side of the passage 44 is closed by a seal 44a, an opening of the downstream of side is opened, and an opening of the upstream side of the passage 46 is opened and an opening of the downstream side is closed by a seal 46a. That is, as shown in FIG. 5, this DPF 40 has the basic honeycomb units 50, an adhesive layer 47 adhering the basic honeycomb units 50 with each other, and a coating layer 48 cylindrically covering the outer circumferential face. However, one of openings of the upstream side and downstream side of the passages 44 and 46 is closed by the seals 44a or 46a (see FIG. 1). Since the passages 44 and the passages 46 are alternately formed, and the partition wall 45 partitioning both the passages is porous, gas can be circulated, however, the PM is trapped by the partition wall 45. The oxidation catalyst carried by this honeycomb structure 42 is not particularly limited as long as it has an operation accelerating the oxidization of the PM trapped in order to regenerate the DPF 40. For example, noble metal catalysts such as platinum, palladium and rhodium, and oxidation catalysts such as CeO$_2$ and an oxide having a perovskite structure are preferable. More preferable is platinum. The carrying amount of the oxidation catalyst, when it is a noble metal catalyst, is preferably 1 to 10 g/L, and more preferably 1 to 5 g/L. The carrying amount, when it is an oxide catalyst, is preferably 30 to 60 g/L. This oxidation catalyst also exhibits operation reducing CO and HC contained in the exhaust gas after passing through the catalyst carrier 30.

Next, a description of the basic honeycomb unit 50 is given. As shown in FIG. 3, the basic honeycomb unit 50 has a rectangular parallelepiped shape with a cross-section in the shape of a square, and has a plurality of through holes 52 installed along the axial direction. This through hole 52 constitutes the passage 34 of the honeycomb structure 32, and the passages 44 and 46 of the honeycomb structure 42. For example, this basic honeycomb unit 50 can be produced as follows. That is, first, an organic binder, a plasticizer and a lubricant are suitably added to silicon carbide powder, and are mixed and kneaded to obtain a material paste. This material paste is extrusion molded by an extruder to obtain a raw molded object having the same shape as that of the basic honeycomb unit 50. The basic honeycomb unit 50 is then obtained by drying, degreasing and firing this raw molded object. A paste having a different composition from that of the material paste used at the time of the production of the basic honeycomb unit 50 may be used as a sealing agent for the seal. However, the use of a paste having the same composition is preferable since a difference in a coefficient of thermal expansion is hardly produced. For example, it is preferable to use one obtained by mixing ceramic particles into an inorganic binder, one obtained by mixing inorganic fibers into the inorganic binder, one obtained by mixing the ceramic particles and the inorganic fibers into the inorganic binder, and one obtained by further adding the organic binder (at least one selected from polyvinyl alcohol, methyl cellulose, ethyl cellulose and carboxymethyl cellulose or the like) thereto as the adhesive or the coating agent. Referring to the size of the basic honeycomb unit 50, the cross-section area of the unit is preferably 5 to 50 cm$^2$. When it is in this range, the specific surface area per the unit volume of the honeycomb structure 32 can be largely maintained and the catalyst can be highly dispersed. In addition, it is because the shape as the honeycomb structures 32 and 42 can be maintained even when an external force such as thermal shock and vibration is added. The cross-section area of the unit is more preferably 6 to 40 cm$^2$, and still more preferably 8 to 30 cm$^2$. The ratio of the total cross-section area of the basic honeycomb unit 50 to the cross-section areas of the honeycomb structures 32 and 42 is preferably 85% or more. When it is in this range, the ratio prevents the specific surface area for carrying the catalyst in the honeycomb structures 32 and 42 from relatively and excessively reducing and prevents the excessive increase of the pressure loss.

Next, the operation of the exhaust gas cleanup device 20 of the present invention will be described with reference to FIG. 1. Herein, the case of using potassium carbonate as the NOx storage catalyst will be illustrated. Fuel is burned by injecting the fuel to air compressed by a piston in each cylinder of the diesel engine 10 to produce a driving force. At this time, the exhaust gas containing HC, CO, NOx and PM is discharged to the exhaust manifold 12 from the diesel engine 10, and flows into the catalyst carrier 30 of the exhaust gas cleanup device 20 through the collecting pipe 12a. The HC and CO contained in the exhaust gas flowing into this catalyst carrier 30 are oxidized by the oxidation catalyst carried by the catalyst carrier 30 to be converted into $CO_2$ and $H_2O$. On the other hand, the NOx contained in the exhaust gas is oxidized by the oxidation catalyst, and is converted to $NO_2$. The $NO_2$ is further oxidized to be converted to a nitrate ion ($NO_3^-$). The nitrate ion is exchanged for a carbonate ion of the potassium carbonate which is the NOx storage catalyst, and is stored as a nitrate ion. When the amount of fuel consumption is then adjusted by the electronic control unit which is not shown, and a rich spike for flowing compulsorily the exhaust gas containing rich HC and CO is performed, the nitrate ion oxidizes HC and CO to convert HC and CO to $H_2O$ or $CO_2$, and the nitrate ion itself is reduced to be converted to $N_2$. The potassium ion is returned to the carbonate via the oxide. Then, the exhaust gas containing the PM after passing through the catalyst carrier 30 flows into the DPF 40. Although the PM contained in the exhaust gas flowing into this DPF 40 enters the passage 46 where the opening of the upstream side of the DPF 40 is opened, the PM passes through the porous partition wall 45 and enters the adjacent passage 44 since the opening of the downstream of the passage 46 is closed by the seal 46a, and flows into the exhaust gas pipe 28 from the opening of the downstream side where the seal 44a of that passage 44 is not provided. The depositing amount of the PM deposited on the partition wall 45 is guessed, and the DPF 40 is regenerated by the post injection after the depositing amount thereof reaches a prescribed amount. Thereby, the exhaust gas passing through the exhaust gas cleanup device 20 flows into the exhaust gas pipe 28 while HC, CO, NOx and PM which were originally contained in the exhaust gas are reduced. At this time, the conversion efficiency of NOx becomes more favorable than the case where the catalyst carrier 30 is made of cordierite, and the regeneration rate of DPF 40 is also enhanced.

Since the porous honeycomb structure 32 mainly composed of silicon carbide is employed according to the catalyst carrier 30 of the embodiment described above in detail, the conversion efficiency of NOx becomes more favorable than the case where the porous honeycomb structure mainly composed of cordierite or the like is employed, and the regeneration rate of the DPF 40 is also increased. Although a cause for the increase in the regeneration rate of the DPF 40 is not clear, it is presumed that the honeycomb structure has low thermal conductivity when the honeycomb structure is mainly composed of cordierite, and sufficient heat cannot be transmitted to the DPF 40 at the time of the regeneration of the DPF 40. By contrast, the sufficient heat can be transmitted to the DPF 40 at the time of the regeneration of the DPF 40 since the honeycomb structure has high thermal conductivity when the honeycomb structure is mainly composed of silicon carbide.

As a matter of course, the present invention is not limited to the embodiment described above, and various aspects can be executed as long as these belong to the technical scope of the present invention.

Although the catalyst carrier 30 and the DPF 40 are stored in the same casing 22 in the embodiment described above, the catalyst carrier 30 and the DPF 40 may be respectively stored in separate casings.

Although the basic honeycomb unit 50 has a quadrangular (square) section shape in the embodiment described above, the basic honeycomb unit may have any shape as long as it has a shape where a plurality of basic honeycomb units can be accumulated by interposing the adhesive, for example, rectangular, hexagonal or fan section shape. Although the through hole has a quadrangular (square) section shape, the through hole may have any shape. For example, the through hole may have a triangular, hexagonal or ellipse section shape.

[Examples]

Hereinafter, experiment examples in which the exhaust gas cleanup device 20 of the embodiment described above is embodied will be described with the evaluation test and evaluation results thereof.

(1) Production of Catalyst Carrier 30

The catalyst carriers 30 of seven kinds are produced, and the catalyst carriers 30 are respectively referred to as NSCs-1 to 7. The term "NSC" stands for NOx Storage Catalyst. Herein, the NSC-1 will be described. First, 7000 parts by weight of silicon carbide coarse powder (average particle diameter: 22 $\mu$m), 3000 parts by weight of silicon carbide fine powder (average particle diameter: 0.5 $\mu$m), 1100 parts by weight of methyl cellulose which is an organic binder, 330 parts by weight of UNILUB (Nippon Oil & Fats Co., Ltd.) which is a lubricant, and 150 parts by weight of glycerin which is a plasticizer were respectively weighed, and these were then mixed and kneaded with 1800 parts by weight of water to obtain a material paste. Next, this material paste was extrusion molded by an extruder to obtain a raw molded object having the same shape as that of the basic honeycomb unit 50. The raw molded object was sufficiently dried with a microwave dryer and a hot air dryer and was kept at 400° C for 2 hours for degreasing. The degreased molded object was then fired at 2200°C for 3 hours to give a square-cylindrical basic honeycomb unit 50 (34.3 x 34.3 mm x 150 mm) having a cell density of 46.5 cells/cm$^2$ (300 cpsi), a porosity of 45%, a wall thickness of 0.2 mm and a quadrangular (square) cell section shape. The average particle diameter was measured by Master Sizer Micro (laser diffraction scattering method) manufactured by MALVERN, and the porosity was measured by a mercury porosimeter. Then, there were mixed 29% by weight of γ-alumina particles (average particle diameter: 2 $\mu$m), 7% by weight of silica alumina fibers (average fiber diameter: 10 $\mu$m, average fiber length: 100 $\mu$m), 34% by weight of silica sol (solid content: 30% by weight), 5% by weight of carboxymethyl cellulose, and 25% by weight of water to prepare an adhesive paste. A unit assembly 58 having a size including a cylindrical shape which was the final shape was constituted by applying the adhesive paste on the outer surface of the basic honeycomb unit 50 so that the thickness of the adhesive paste was set to 1 mm and by accumulating the basic honeycomb units 50. The unit assembly 58 was then cut using a diamond cutter so that the unit assembly 58 had the cylindrical shape which was the final shape. Thereby, the outer circumferential face was finished into a smooth cylindrical surface while a portion where the partition wall 35 of the outer circumferential face was destroyed was filled with the coating agent (previous adhesive paste) to obtain a honeycomb structure 32. The rate of the adhesive (containing a coating agent) of this honeycomb structure 32 was 6.5 % by weight. The apparent density was calculated by dividing the weight of the basic honeycomb unit 50 which was a substrate by the volume. The apparent density of the adhesive was calculated by cutting out a cube of which one side is 1cm from an adhesive block produced separately, and by measuring the weight thereof. The sum of a value obtained by multiplying the apparent density of the substrate by (1-0.065) and another value obtained by multiplying the apparent density of the adhesive by 0.065 was calculated, and the sum was used as the whole apparent density. Physical property values and sizes were summarized in Table 1.

[Table 1]

| | Material | Wall thickness (mm) | Cell density (cpsi) | Porosity (%) | Apparent density(g/cm$^3$) | | |
|---|---|---|---|---|---|---|---|
| | | | | | Substrate | Adhesive | whole |
| NSC-1 | SiC | 0.2 | 300 | 45 | 0.45 | 1.82 | 0.54 |
| NSC-2 | SiC | 0.175 | 350 | 48 | 0.40 | 1.82 | 0.49 |
| NSC-3 | SiC | 0.25 | 300 | 45 | 0.55 | 1.82 | 0.63 |
| NSC-4 | SiC | 0.4 | 170 | 42 | 0.68 | 1.82 | 0.76 |
| NSC-5 | SiC | 0.3 | 300 | 60 | 0.47 | 1.82 | 0.56 |
| NSC-6 | Cordierite | 0.175 | 400 | 36 | 0.41 | - | 0.41 |
| NSC-7 | Si-SiC | 0.25 | 300 | 45 | 0.51 | 1.82 | 0.60 |
| NSCs respectively have a size of $\phi$ 143.8 $\times$ 75 (unit: mm) and volume of 1.22 (unit: L), and carry platinum of 5g/L and potassium of 0.3 mol/L as a catalyst. | | | | | | | |

Next, active alumina powder (average particle diameter: 2 μm) of 100 parts by weight was mixed in water of 200 parts by weight. A nitric acid of 20 parts by weight was added thereto to prepare wash coating slurry. After the honeycomb structure 32 was immersed in the slurry, and was pulled up, excessive slurry was removed, and the honeycomb structure 32 was dried at 250° C for 15 minutes. The carrying amount of alumina was 150 g/L per the unit volume of the honeycomb structure 32. Next, a potassium nitrate solution of 0.5 mol/L was prepared. The potassium nitrate solution was absorbed into the honeycomb structure 32 so that the carrying amount of potassium was 0.3 mol/L in the mol of the potassium per the unit volume of the honeycomb structure 32. The honeycomb structure 32 was dried at 250° C for 15 minutes and was fired at 500° C for 30 minutes. Next, a platinum nitrate solution of 0.25 mol/L was prepared. A platinum nitrate solution was absorbed into the honeycomb structure 32 so that the carrying amount of platinum is 5.0 g/L in the weight of platinum per the unit volume of the honeycomb structure, and the honeycomb structure 32 was fired at 600° C for 1 hour. Thus, the NSC-1 which is the catalyst carrier 30 was obtained.

The NSCs-2 to 7 were prepared according to the preparation rate of material pastes shown in Tables 2, 3 or 4, and were produced according to the production procedure of the NSC-1. The physical property values and sizes of the honeycomb structures 32 of the NSCs 2 to 7 were summarized in Table 1.

[Table 2]

| | SiC Material paste | | | | |
|---|---|---|---|---|---|
| | Porosity 40% | Porosity 42% | Porosity 45% | Porosity 48% | Porosity 60% |
| SiC coarse powder(22 μm) | 7000 | 7000 | 7000 | 5940 | 4540 |
| SiC fine powder(0.5 μm) | 3000 | 3000 | 3000 | 2550 | 1950 |
| Methyl cellulose | 550 | 700 | 1100 | 700 | 700 |
| Acrylate (40 μm) | - | - | - | 280 | 630 |
| UNILUB | 330 | 330 | 330 | 330 | 330 |
| Glycerin | 150 | 150 | 150 | 150 | 150 |
| Water | 1800 | 1800 | 1800 | 1500 | 1200 |
| Firing temperature (°C) | 2200 | 2200 | 2200 | 2200 | 2200 |
| Firing time(hr) | 3 | 3 | 3 | 3 | 3 |
| | DPF-1 | NSC-4 DPF-3 | NSC-1, 3 DPF-2 | NSC-2 | NSC-5 |

[Table 3]

| | Cordierite(Porosity36%) Material paste |
|---|---|
| Talc powder (10 μm) | 4000 |
| Kaolin powder (9 μm) | 1000 |
| Alumina powder (9.5 μm) | 1700 |
| Alminum hydroxide powder (5 μm) | 1600 |
| Silica powder (10 μm) | 1500 |
| Carboxymethylcellulose | 500 |
| UNILUB | 400 |
| Solvent (ox-20) | 1100 |
| Firing temperature (°C) | 1400 |
| Firing time (hr) | 3 |
| | NSC-6 |

[Table 4]

|  | Si-SiC(Porosity45%) Material paste |
|---|---|
| SiC(50 $\mu$m) | 8000 |
| Si(4 $\mu$m) | 2000 |
| Methyl cellulose | 1100 |
| Acrylate (40 $\mu$m) | - |
| UNILUB | 330 |
| glycerin | 150 |
| water | 2000 |
| Firing temperature (°C) | 1450 |
| Firing time (hr) | 0.5 |
|  | NSC-7 |

(2) Production of DPF 40

DPFs 40 of three kinds were produced, and were respectively referred to as DPFs-1 to 3. Herein, the DPF-1 will be described. First, 7000 parts by weight of silicon carbide coarse powder (average particle diameter: 22 $\mu$m), 3000 parts by weight of silicon carbide fine powder (average particle diameter: 0.5 $\mu$m), 550 parts by weight of methyl cellulose which is an organic binder, 330 parts by weight of UNILUB (Nippon Oil & Fats Co., Ltd.) which is a lubricant, and 150 parts by weight of glycerin which is a plasticizer were respectively weighed. They were mixed and kneaded with 1800 parts by weight of water to obtain a material paste. Next, this material paste was extrusion molded by an extruder to obtain a raw molded object having the same shape as that of the basic honeycomb unit 50. The raw molded object was sufficiently dried with a microwave dryer and a hot air dryer. The plurality of passages 44 were sealed by using the material paste so that the passage 44 having one end face sealed and the other end face opened, and another passage 44 having one end face opened and the other end face sealed were alternately arranged, and were kept at 400° C for 2 hours for degreasing. The degreased molded object was then fired at 2200°C for 3 hours to give a square-cylindrical basic honeycomb unit 50 (34.3 x 34.3 mm x 150 mm) having a cell density of 46.5 cells/cm$^2$ (300 cpsi), a porosity of 40%, a pore diameter of 12.5 $\mu$m, a wall thickness of 0.2 mm and a quadrangular (square) cell section shape. The average particle diameter was measured by Master Sizer Micro (laser diffraction scattering method) manufactured by MALVERN, and the porosity and the pore diameter were measured by a mercury porosimeter. Next, the honeycomb structure 42 was obtained according to the production procedure of the NSC-1. The rate of the adhesive (containing the coating agent) of the honeycomb structure 42 was 6.5 % by weight. The whole apparent density was calculated in the same manner as in the NSC-1. The physical property values and sizes were summarized in Table 5.

[Table 5]

| | Material | Wall thickness (mm) | Cell density (cpsi) | Porosity (%) | Pore diameter ($\mu$m) | Apparent density(g/cm$^3$) | | |
|---|---|---|---|---|---|---|---|---|
| | | | | | | Substrate | Adhesive | Whole |
| DPF-1 | SiC | 0.2 | 300 | 40 | 12.5 | 0.49 | 1.82 | 0.57 |
| DPF-2 | SiC | 0.25 | 350 | 45 | 12.5 | 0.55 | 1.82 | 0.63 |
| DPF-3 | SiC | 0.4 | 170 | 42 | 11 | 0.68 | 1.82 | 0.76 |
| DPFs respectively have a size of $\phi$ 143.8 $\times$ 150 (unit: mm) and volume of 2.44 (unit: L), and carry platinum of 5g/L as a catalyst. | | | | | | | | |

Next, active alumina powder (average particle diameter: 2 $\mu$m) of 100 parts by weight was mixed in water of 200 parts by weight, and a nitric acid of 20 parts by weight was added thereto to prepare wash coating slurry. After the honeycomb structure 32 was immersed in the slurry, and was pulled up, excessive slurry was removed, and the honeycomb structure 32 was dried at 250° C for 15 minutes. The amount of alumina carried was 50 g/L per the unit volume of the honeycomb structure 42. Next, a platinum nitrate solution of 0.25 mol/L was prepared. A platinum nitrate solution was absorbed into the honeycomb structure 42 so that the carrying amount of platinum is 5.0 g/L in the weight of platinum per the unit volume of the honeycomb structure. The honeycomb structure 42 was fired at 600°C for 1 hour. Thus, the DPF-1 which is the DPF 40 was obtained.

The DPFs-2 and 3 were prepared according to the preparation rate of material pastes shown in Table 2, and were produced according to the production procedure of the DPF-1. The physical property values and sizes of the honeycomb structures 42 of the DPFs-2 and 3 were summarized in Table 5.

(3) Production of Exhaust Gas cleanup device 20

The exhaust gas cleanup devices 20 of experimental examples 1 to 11 were produced by storing the catalyst carriers 30 (NSCs-1 to 7) and DPFs 40 (DPFs 1 to 3) in the casing 22 in the combination shown in Table 6. The intervals between the catalyst carriers 30 and DPFs 40 were set to values shown in Table 6.

(4) Evaluation Method and Evaluation Result of Exhaust Gas cleanup device 20

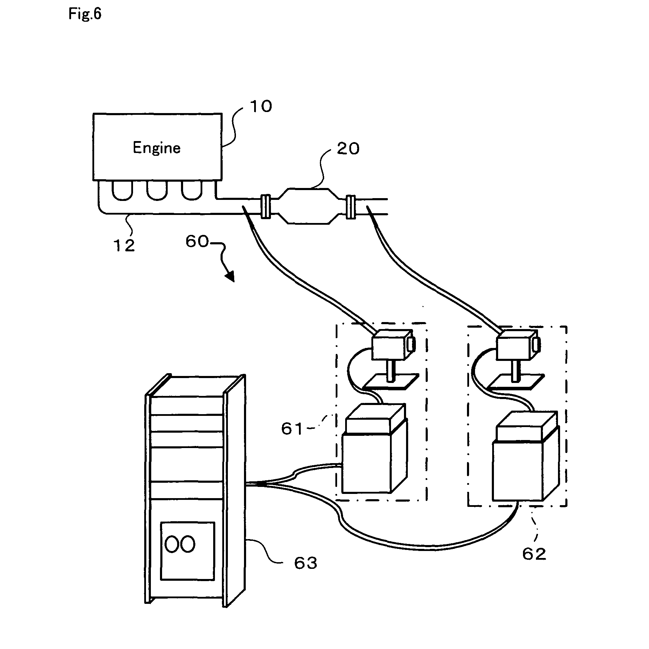

The conversion efficiencies of the exhaust gases of experimental examples 1 to 11 were measured. This measurement was performed using an exhaust gas purification and conversion measurement device 60 shown in FIG. 6. The exhaust gas purification and conversion measurement device 60 is constituted by an exhaust gas cleanup device 20, a first gas sampler 61 for sampling the exhaust gas before passing through the exhaust gas cleanup device 20, a second gas sampler 62 for sampling the exhaust gas after passing through the exhaust gas cleanup device 20, and a gas analyzer 63 for analyzing the concentration of a toxic substance contained in the exhaust gas. Next, the measurement procedure will be described. First, the exhaust manifold 12 of the diesel engine 10 was connected to the flange of the upstream side of the exhaust gas cleanup device 20, and the exhaust gas was sent out to the exhaust gas cleanup device 20. In this measurement, an operation was performed according to 10. 15 mode exhaust gas measuring method of a diesel engine automobile, and an operation of reducing and discharging NOx stored in the catalyst carrier 30 by the rich spike was then repeated ten times. The diesel engine 10 was then operated and controlled by the electronic control unit which is not shown so that the DPF 40 is regenerated by the post injection.

The concentrations of carbon monoxide (CO), hydrocarbon (HC) and nitrogen oxide (NOx) contained in the exhaust gas sampled by the first and second gas samplers 61 and 62 were measured by a gas analyzer 63. The conversion efficiency was calculated from the following formula (1) by using a concentration C0 contained in the exhaust gas before passing through the exhaust gas cleanup device 20 and a concentration C1 contained in the exhaust gas after passing through the exhaust gas cleanup device 20. The conversion efficiency herein was represented by an average value under measurement execution. The weight W1 of non-regenerated PM was calculated from a change of the weight of the DPF 40 before and after the measurement. By contrast, the depositing amount WO of the PM when performing an operation control on the same condition as a comparison experiment and when not performing a regeneration operation was calculated. The regeneration rate was computed from the following formula (2) using them. These results are shown in Table 6.

$$\text{Conversion Efficiency (\%)} = (C0-C1)/C0 \times 100; \text{ Formula (1)}$$

$$\text{Regeneration rate (\%)} = (W0-W1)/W0 \times 100; \text{ Formula (2)}$$

[Table 6]

| | NSC kind | interval (mm) | DPF kind | Conversion efficiency (%) | | | DPF | |
|---|---|---|---|---|---|---|---|---|
| | | | | HC | CO | NOx | Trapping efficiency (%) | Regeneration rate(%) |
| Experimental example 1 | NSC-1 | 2 | DPF-1 | 86 | 90 | 65 | 100 | 91 |
| Experimental example 2 | NSC-1 | 5 | DPF-2 | 84 | 89 | 65 | 100 | 89 |
| Experimental example 3 | NSC-1 | 10 | DPF-3 | 83 | 86 | 63 | 100 | 88 |
| Experimental example 4 | NSC-2 | 20 | DPF-2 | 86 | 90 | 67 | 100 | 86 |
| Experimental example 5 | NSC-3 | 50 | DPF-2 | 81 | 83 | 60 | 100 | 89 |
| Experimental example 6 | NSC-7 | 50 | DPF-2 | 82 | 83 | 60 | 100 | 80 |
| | | | | | | | | |
| Experimental example 7 | NSC-4 | 20 | DPF-2 | 70 | 74 | 56 | 100 | 93 |
| Experimental example 8 | NSC-5 | 5 | DPF-2 | 83 | 85 | 62 | 100 | 75 |
| Experimental example 9 | NSC-6 | 2 | DPF-1 | 91 | 95 | 51 | 100 | 72 |
| Experimental example 10 | NSC-6 | 5 | DPF-2 | 90 | 93 | 49 | 100 | 68 |
| Experimental example 11 | NSC-6 | 10 | DPF-3 | 88 | 92 | 49 | 100 | 65 |

The exhaust gas cleanup devices 20 of the experimental examples 1 to 6 employ any of the NSCs-1 to 3 (the honeycomb structure 32 made of the porous silicon carbide sintered body, and having an apparent density of 0.4 g/cm$^3$ to 0.7 g/cm$^3$, a porosity of 40% to 50% and a wall thickness of 0.1 mm to 0.25 mm), and NSC-7 (the honeycomb structures 32 made of a silicon-silicon carbide sintered body and having an apparent density of 0.4 g/cm$^3$ to 0.7 g/cm$^3$, a porosity of 40% to 50% and a wall thickness of 0.1 mm to 0.25 mm) as the catalyst carrier 30. In these exhaust gas cleanup devices 20, the conversion efficiencies of HC and CO, the conversion efficiency of NOx, and the regeneration rate of the DPF 40 were, respectively, 80% or more, 80% or more, 60% or more, and 80% or more.

The exhaust gas cleanup devices 20 of the experimental example 7 employs the NSC-4 (the honeycomb structure 32 made of a porous silicon carbide sintered body and having a wall thickness of more than 0.25 mm and an apparent density of more than 0.7 g/cm$^3$). The conversion efficiencies of HC and CO, the conversion efficiency of NOx, and the regeneration rate of the DPF 40 were, respectively, less than 80%, less than 80%, less than 60%, and 93%.

The exhaust gas cleanup devices 20 of the experimental example 8 employs the NSC-5 (the honeycomb structure 32 made of a porous silicon carbide sintered body and having a wall thickness of more than 0.25 mm and a porosity of more than 50%). The conversion efficiencies of HC and CO, the conversion efficiency of NOx, and the regeneration rate of the DPF 40 were, respectively, 80% or more, 80% or more, 60% or more, and 75%. It is presumed that the low regeneration rate of the DPF 40 is caused by a slight shortage of the heat conduction to the DPF 40 at the time of the regeneration of the DPF from the reduction of the thermal conductivity due to a comparatively large value of the porosity.

The exhaust gas cleanup devices 20 of the experimental examples 9 to 11 employ the NSC-6 (the honeycomb structure 32 made of cordierite). The conversion efficiencies of HC and CO, the conversion efficiency of NOx, and the regeneration rate of the DPF 40 were, respectively 80% or more, 80% or more, less than 55%, and less than 72%. That is, the conversion efficiency of NOx and the regeneration rate of the DPF 40 were reduced as compared with the experimental examples 1 to 8.

The present invention claims priority from Japan patent application No. 2005-291268 filed on October 4, 2005, and International Application No. PCT/JP2006/314904 filed on July 27, 2006.

Industrial Applicability

The present invention can be used for, for example, circulating the fluid in the porous honeycomb structure to remove undesired substances contained in the fluid and to convert the components contained in the fluid to other components. Specifically, the present invention can be used in various kinds of filter-related industries for purifying and/or converting the gas and the fluid.

**Claims**

1. A porous honeycomb structure for carrying a catalyst, wherein the porous honeycomb structure is mainly composed of silicon carbide, and has a wall thickness of 0.1 mm to 0.25 mm and an apparent density of 0.4g/cm$^3$ to 0.7 g/cm$^3$.

2. The porous honeycomb structure according to claim 1, wherein the porous honeycomb structure has a porosity of 40% to 50%.

3. A porous honeycomb structure for carrying a catalyst, wherein the porous honeycomb structure is mainly composed of silicon carbide, and has an apparent density of 0.4g/cm$^3$ to 0.7 g/cm$^3$ and a porosity of 40% to 50%.

4. The porous honeycomb structure according to any one of claims 1 to 3, wherein one of or both an oxidation catalyst and NOx storage catalyst is carried as the catalyst.

5. The porous honeycomb structure according to any one of claims 1 to 4, wherein the porous honeycomb structure is provided at the upstream of a particulate filter in a casing allowing exhaust gas of a diesel engine to pass therethrough.

6. An exhaust gas cleanup device comprising:

   a casing allowing exhaust gas of a diesel engine to pass therethrough;
   a catalyst carrier stored in the casing; and
   a particulate filter stored at the downstream of the catalyst carrier in the casing,

wherein the catalyst carrier includes a porous honeycomb structure mainly composed of silicon carbide and having a wall thickness of 0.1 mm to 0.25 mm and an apparent density of $0.4 g/cm^3$ to $0.7$ $g/cm^3$ and a catalyst carried by the porous honeycomb structure, and the particulate filter is a porous honeycomb structure mainly composed of silicon carbide.

7. The exhaust gas cleanup device according to claim 6, wherein the porous honeycomb structure constituting the catalyst carrier has a porosity of 40% to 50%.

8. An exhaust gas cleanup device comprising:

   a casing allowing exhaust gas of a diesel engine to pass therethrough;
   a catalyst carrier stored in the casing; and
   a particulate filter stored at the downstream of the catalyst carrier in the casing,

   wherein the catalyst carrier includes a porous honeycomb structure mainly composed of silicon carbide and having an apparent density of $0.4 g/cm^3$ to $0.7$ $g/cm^3$ and a porosity of 40% to 50% and a catalyst carried by the porous honeycomb structure, and the particulate filter is a porous honeycomb structure mainly composed of silicon carbide.

9. The exhaust gas cleanup device according to any one of claims 6 to 8, wherein one of or both an oxidation catalyst and NOx storage catalyst is carried by the porous honeycomb structure constituting the catalyst carrier.

Fig.1

Fig.2

Fig.3

Fig.4

Fig.5

Fig.6

<table>
<tr><td colspan="2" align="center">**INTERNATIONAL SEARCH REPORT**</td><td>International application No.<br>PCT/JP2006/314904</td></tr>
</table>

**A. CLASSIFICATION OF SUBJECT MATTER**
*B01J27/224*(2006.01)i, *B01D39/20*(2006.01)i, *B01D46/00*(2006.01)i, *B01D53/86*
(2006.01)i, *B01D53/94*(2006.01)i, *B01J32/00*(2006.01)i, *B01J35/04*(2006.01)i,
*F01N3/02*(2006.01)i, *F01N3/28*(2006.01)i
According to International Patent Classification (IPC) or to both national classification and IPC

**B. FIELDS SEARCHED**

Minimum documentation searched (classification system followed by classification symbols)
B01J27/224, B01D39/20, B01D46/00, B01D53/86, B01D53/94, B01J32/00,
B01J35/04, F01N3/02, F01N3/28

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)
JST7580(JDream2), JSTPlus(JDream2), WPI(DIALOG)

**C. DOCUMENTS CONSIDERED TO BE RELEVANT**

| Category* | Citation of document, with indication, where appropriate, of the relevant passages | Relevant to claim No. |
|---|---|---|
| P,X | JP 2006-189027 A  (Denso Corp.),<br>20 July, 2006 (20.07.06),<br>Example 4; table 1<br>(Family: none) | 3,4 |
| A | JP 2005-087805 A  (NGK Insulators, Ltd.),<br>07 April, 2005 (07.04.05),<br>Full descriptions<br>& WO 2005/025720 A1 | 1-9 |
| A | JP 04-040235 A  (Riken Corp.),<br>10 February, 1992 (10.02.92),<br>Full descriptions<br>(Family: none) | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 August, 2006 (15.08.06) | Date of mailing of the international search report<br>29 August, 2006 (29.08.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/314904

C (Continuation). DOCUMENTS CONSIDERED TO BE RELEVANT

| Category* | Citation of document, with indication, where appropriate, of the relevant passages | Relevant to claim No. |
|---|---|---|
| A | JP 03-118811 A (Riken Corp.),<br>21 May, 1991 (21.05.91),<br>Full descriptions<br>& GB 2236493 A      & DE 4031385 A1 | 1-9 |
| A | WO 2004/113252 A1 (Ibiden Co., Ltd.),<br>29 December, 2004 (29.12.04),<br>Full descriptions<br>& EP 1538133 A1 | 1-9 |
| A | WO 2004/069397 A2 (CORNING INC.),<br>19 August, 2004 (19.08.04),<br>Full descriptions<br>& US 2004/0152593 A1 | 1-9 |
| A | JP 2001-098925 A (Ibiden Co., Ltd.),<br>10 April, 2001 (10.04.01),<br>Full descriptions<br>(Family: none) | 5-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001098925 A
- JP 2005291268 A
- JP 2006314904 W